# EUROPEAN PATENT APPLICATION

(11) **EP 4 542 478 A1**
(43) Date of publication of application: **23.04.2025**
(21) Application number: 23204899.1
(22) Date of filing: 20.10.2023
(51) Int. Cl.: G06Q 50/06, G06Q 10/04

(54) **METHOD AND SYSTEM FOR OPERATIONAL OPTIMIZATION OF AN INDUSTRIAL PLANT**

(71) Applicant: ABB SCHWEIZ AG, 5400 Baden (CH)
(72) Inventor: MARTINI, Riccardo, 16137 Genova (IT); GUTERMUTH, Georg, 69115 Heidelberg (DE); FRANKE, Rüdiger, 68623 Lampertheim (DE)
(74) Representative: Maiwald GmbH

(57) **Abstract**

A computer-implemented method for operational optimization of an industrial plant (500) comprising at least one hydrogen producer (510) and at least one hydrogen consumer (520), the industrial plant (500) being couplable to at least one source of electrical energy (600) is proposed. The method comprises receiving, at a computing system (100), values of operational parameters of the industrial plant (500), the operational parameters including at least hydrogen production by the at least one hydrogen producer (510), hydrogen consumption by the at least one hydrogen consumer (520), energy production of the industrial plant (500), energy consumption of the industrial plant (500), availability of electrical energy via the at least one source of electrical energy (600) and pricing of electrical energy; computing a forecasted time-series for values and/or boundaries of the operational parameters of the industrial plant (500); and determining, by means of an optimization module (124) of the computing system (100) based on the received values of the operational parameters and the computed forecasted time-series for values and/or boundaries of the operational parameters of the industrial plant (500), one or more optimum operational setpoints for optimizing operational control of the industrial plant (500) in terms of at least one of energy consumption and operation costs of the industrial plant (500), wherein the one or more optimum operational setpoints are determined based on at least one degree of freedom for the industrial plant (500).

## Description

### Technical Field

The present disclosure generally relates to operational optimization and/or control of industrial plants that include at least one hydrogen producer. Specifically, the present disclosure relates to a computer-implemented method for operational optimization and/or control of an industrial plant comprising at least one hydrogen producer and at least one hydrogen consumer. Further, the present disclosure relates to a corresponding computer program, to a computer-readable medium storing such computer program, and to a computing system for operational control of an industrial plant.

### Technical Background

Industrial plants, such as e.g. refineries and chemical plants, can have a significant hydrogen (H₂) consumption and can be equipped with one or more hydrogen producers or hydrogen producing units. Hydrogen can be relevant in refinery operations and in many chemical processes, as it can be used by several processing units and/or components of the respective industrial plant. Further the role of hydrogen and its importance has grown over the past few years, in particular because hydrogen can support fuel desulfurization and may be used in the production of biofuels or eFuels, such as e.g. Sustainable Aviation Fuel (SAF).

In many industrial plants comprising an H2 producer, the H2 network of the industrial plant can be relevant to refinery operations and there is typically no storage for the produced H2. As a result, continuous balancing between production and consumption can be important to keep the H2 pressure in the H2 network in a suitable range. Therein, H2 can also be produced by a reforming process, e.g. as a byproduct of reformate production, which can add further complexity and disturbances to the H2 network management of an industrial plant.

The H2 utilized in industrial plants for refinery use is usually produced by steam methane reformers (SMR). These H2 producers or units produce so called grey hydrogen, which can have a large carbon dioxide (CO₂) emission footprint. For each ton of H2, there may be a production of about seven to ten tons of CO₂. Optionally, grey hydrogen produced by SMR units can be converted to blue hydrogen, for example via post combustion carbon capture or using autothermal reforming (ATR) and/or ATR units. Further, some industrial plants or refineries utilize gasification to produce hydrogen in an integrated gasification combined cycle (IGCC). Hydrogen produced based on gasification is typically categorized as black or brown hydrogen depending on the type of IGCC. On the other hand, green H2 expectedly becomes more and more relevant to industrial plants as a substitute or complement to SMR or IGCC-generated H2.

Today there are several options to run such plants including at least one H2 producer. For instance, conventional and known industrial plants are run by separate automation solutions for plant subsystems or even process units that might be interlinked via a few parameters, wherein a general overarching control can be utilized to control the H2 pressure in the H2 network of the industrial plant via letdown or relief valves to fuel gas, or to lower purity and pressure levels of the generated H2. In such systems, operators are in charge of selecting production or operation setpoints for separate H2 producers. Alternatively, rule-based decision models, for example based on what-if tables, can be utilized, which instruct operators on how to react in certain situations on top of the above strategies. Typically, the rules determine how to rebalance an H2 network and how to avoid let-down and flaring of H2. Other conventional and known controls of industrial plants use offline simulation models for a what-if-analysis and for determining e.g., optimal allocation schedules that are followed by automation systems, such as Advanced Process Control (APC) and a Distributed Control System (DCS). Also, optimization models considering differences in the costs of producing H2 with different units can be utilized to pass a setpoint to APC or DCS resident strategies.

Apart from the aforementioned complexity introduced by H2 producers of low purity and quality, such as black, brown and grey hydrogen, production of green hydrogen may pose additional requirements onto the control of industrial plants, because production of green H2 is naturally linked to the availability of renewable energy, which can be heavily influenced by factors not under the control of the respective industrial plant, such as the availability of wind and solar irradiance at the location where the renewable energy is produced, which may be remote from the location of the industrial plant. Also, additional disturbances of existing H2 networks in industrial plants are expected for the production of green H2. Overall, optimizing control and/or operation of an industrial plant that includes at least one H2 producer can be challenging, and currently used solutions may be insufficient.

### Summary

It may, therefore, be desirable to provide for an improved method and system for operational control of an industrial plant comprising at least one hydrogen producer, which can allow for a comprehensive optimization of the control and/or operation of the industrial plant. In particular, the method and system described herein can overcome or at least mitigate the aforementioned shortcomings and drawbacks of currently used control systems and solutions.

Aspects of the present disclosure relate to a computer-implemented method for operational optimization and/or control of an industrial plant, to a corresponding computer program, to a computer-readable medium storing such computer program, and to a computing system configured to carry out steps of the method for operational optimization and/or control of the industrial plant. It is emphasized that any feature function, element and/or step described with reference to one or an aspect of the present disclosure, equally applies to any other aspect of the present disclosure. In particular, any feature, function and/or step of the method can be a feature, element and/or function of the computing system, and vice versa.

According to an aspect, there is provided a computer-implemented method for operational optimization and/or operational control of an industrial plant. Alternatively or additionally, the method may relate to a computer-implemented method of optimizing operational control and/or operation of the industrial plant. One or more steps of the method, in particular all steps of the method, can be carried out by means of a computing system or device. The industrial plant comprises at least one hydrogen (H2) producer and at least one hydrogen consumer. Further, the industrial plant is couplable and/or coupled to at least one source of electrical energy. The method comprises the following steps:
- receiving, at a computing system, values of operational parameters of the industrial plant, the operational parameters including at least hydrogen production by the at least one hydrogen producer, hydrogen consumption by the at least one hydrogen consumer, energy production of the industrial plant, energy consumption of the industrial plant, availability of electrical energy via the at least one source of electrical energy and pricing of electrical energy;
- computing and/or determining, by means of a modelling module of the computing system based on a computational model of the industrial plant and its physical interaction with the at least one source of electrical energy, a forecasted time-series for values and/or a forecasted time-series for boundaries of the operational parameters of the industrial plant; and
- computing and/or determining, by means of an optimization module of the computing system based on the received values of the operational parameters and the computed forecasted time-series for values and/or boundaries of the operational parameters of the industrial plant, one or more optimum operational setpoints for optimizing operational control and/or operation of the industrial plant in terms of at least one of energy consumption and operation costs of the industrial plant, wherein the one or more optimum operational setpoints are determined based on and/or taking into consideration at least one degree of freedom for the industrial plant.

The industrial plant, as used herein, may refer to a plant for industrial production of a product by means of an industrial process, wherein the industrial plant is equipped with and/or utilizes at least one H2 producer to produce H2 and at least one H2 consumer consuming H2, for example H2 generated by the at least one H2 producer. Non-limiting examples are chemical plants for producing a chemical product and refineries for fuel production. The industrial plant may optionally comprise, in addition to the at least one H2 producer and the at least one H2 consumer, one or more further components and/or units, in particular one or more further components consuming energy, producing energy, converting energy, and/or storing energy, as will be further described hereinbelow.

The operational parameters of the industrial plant may refer to or include any parameter associated with or related to operation of one or more components of the industrial plant and/or overall operation of the industrial plant. The operational parameters include, but are not limited to, at least hydrogen production by the at least one hydrogen producer, hydrogen consumption by the at least one hydrogen consumer, energy production of the industrial plant, energy consumption of the industrial plant, availability of electrical energy via the at least one source of electrical energy and pricing of electrical energy. Therein, "energy production by the industrial plant" may include energy production of one or more components of the industrial plant, such as energy production of one or both of the H2 producer and the H2 consumer. Alternatively or additionally, "energy consumption by the industrial plant" may include energy consumption of one or more components of the industrial plant, such as energy consumption of one or both of the H2 producer and the H2 consumer. Further, the pricing of electrical energy may refer to a market price of electrical energy for purchasing electrical energy from the energy market and/or for selling electrical energy on the energy market, e.g. via a supply grid.

The received values of the operational parameters may, for example, be obtained from and/or based on measured values of the operational parameters at the industrial. For instance, the received values of the operational parameters may at least in part be measured process variables or obtained therefrom. The received values may refer to currently measured, actual and/or recent values of the operational parameters.

The computing system may refer to any type of computing device for data processing. The computing system may include one or more processors for data processing. The computing system may optionally include one or more other components, such as e.g. an interface for receiving the one or more operational parameters, a data storage for storing data, such as the received operational parameters, an interface for controlling at least a part of the industrial plant, a user interface for operating the computing system and/or for outputting data, such as the determined optimum operational setpoints, and others.

The modelling module and the optimization module of the computing system, may refer to functional components or modules of the computing system, which may be implemented in software, and optionally in hardware, for example based on one or more application specific circuits, one or more interfaces, or the like.

The computational model of the industrial plant may refer to a mathematical abstraction of the industrial plant with its components, also referred to as process units, and interactions between the components and the at least one source of electrical energy, such as energy consumption from the at least one source of electrical energy. For example, the computational model may refer to or include a simulation model for simulating the industrial plant and at least in part the corresponding production process involving one or more components, respectively process units, of the industrial plant.

Computing the forecasted time-series for values and/or the forecasted time-series of boundaries of the operational parameters of the industrial plant may include predicting, estimating and/or computing one or more values and/or boundaries of the operational parameters for a plurality of different time points or instants in the future. Accordingly, the time-series for values and/or the boundaries of the operational parameters may be predicted for at least two different time points in the future. Therein, the boundaries of the operational parameters may refer to limits of and/or may define a range of the operational parameters. For instance, the forecasted times-series of values for and/or boundaries of the operational parameters may be computed based on historic values of the operational parameters, optionally using a dedicated forecasting or prediction model.

The term "operational setpoints" may refer to one or more values of one or more control parameters of the industrial plant and/or one or more components thereof, such as the at least one H2 producer and/or the at least one H2 consumer. The "optimum operational setpoints" may denote the operational setpoints determined by the computing system, which best meet one or more criteria defined in an objective function used by the optimization module, according to which operation and/or operational control of the industrial plant can be optimized. The optimum operational setpoints may be usable for controlling the industrial plant and/or one or more components thereof.

The one or more criteria defined in the objective function may include at least one of energy consumption and operation costs of the industrial plant. Therein, optimizing energy consumption and/or operation costs of the industrial plant can include optimizing energy consumption and/or operation costs of one or more components of the industrial plant, such as the at least one H2 producer and/or or the at least on H2 consumer. The objective function may include one or more further criteria, according to which operation and/or operational control of the industrial plant can be optimized. Non-limiting examples of further criteria can relate to storage of energy and/or hydrogen, and to energy conversion from one type into another, e.g. from thermal to electrical energy, as will be further discussed hereinbelow.

The one or more optimum operational setpoints may be determined based on and/or taking into consideration at least one degree of freedom for the industrial plant. Therein, the degree of freedom may be associated with and/or relate to the one or more criteria defined in the objective function, according to which operation and/or operational control of the industrial plant is optimized, such as energy consumption and operational costs. For example, at least one degree of freedom may be included in the objective function. Alternatively or additionally, at least one degree of freedom may be included in the computational model of the industrial plant. Accordingly, the forecasted values and/or boundaries of the operational parameters may be computed and/or determined based on modelling the industrial plant and its physical interaction with the at least one source of electrical energy, and considering the at least one degree of freedom in the computational model.

The features and steps of the method described herein synergistically interact to provide for a versatile method for optimizing operation of the industrial plant, which can provide advantages in many different use cases. For example, alternative or additional supply paths for hydrogen may be analyzed and utilized in the industrial plant based on the optimization. Also, switching between hydrogen paths based on changing situations may be enabled. Further, components of the industrial plant, such as the H2 producer, the H2 consumer, one or more energy storages or other components may be analyzed in terms of their impact on energy consumption and operational costs and used or operated in an optimal way. Also, waste, such as hydrogen, heat or steam, may be reduced due to the optimum utilization of one or more components of the industrial plant. Moreover, the production schedule and thus energy plan of the industrial plant may be changed based on the optimization, for example to react to requirements or opportunities from an electrical supply grid. These and other advantages and benefits provided by the method of the present disclosure will further be elucidated hereinbelow.

According to an embodiment, the at least one source of electrical energy includes one or more of an energy supply grid, a generator, a photovoltaic device, a wind turbine, a water power generator, and an electrical energy storage. Accordingly, the at least one source of electrical energy may be an external source of electricity that may be couplable and/or coupled to the industrial plant. For example, the at least one source of electrical energy may be remote from a location of the industrial plant. Alternatively or additionally, the at least one source of electrical energy may be located in a vicinity of the industrial plant or at the industrial plant. The industrial plant may be supplied with electrical energy from the at least one source of electrical energy, and optionally the industrial plant may be configured to supply excessive electrical energy to the at least one electrical source. It should be noted that the industrial plant can comprise a plurality of sources of electrical energy, such that electrical energy can be supplied via different paths to the industrial plant and/or purged therefrom.

For example, electrical energy or electricity may be received by the industrial plant from an energy supply grid, respectively the at least one source of electrical energy, to power one or more components of the plant at times when a demand or consumption of electrical energy of the industrial plant exceeds an energy production of the industrial plant. Alternatively or additionally, electrical energy or electricity may be supplied by the industrial plant to the energy supply grid, respectively the at least one source of electrical energy, at times when a production of electrical energy of the industrial plant exceeds an energy consumption of the industrial plant.

According to an embodiment, the at least one degree of freedom for the industrial plant for determining the one or more optimum operational setpoints is constituted by one or more of:
- at least one energy storage of the industrial plant for storing electrical energy, thermal energy and/or hydrogen;
- at least two different types of energy storage of the industrial plant;
- at least two different types of hydrogen producers;
- at least one further source of electrical energy;
- at least one further hydrogen producer;
- at least one further hydrogen consumer;
- at least one energy cogeneration unit;
- at least one heat generator for generating thermal energy based on hydrogen and/or electrical energy; and
at least one steam generator for generating steam.
Therein, different types of energy storage may refer to energy storages storing different forms of energy, such as thermal energy, electrical energy and hydrogen (energy). Accordingly, the term energy storage as used herein can include one or more of an electrical energy storage for storing electrical energy, a thermal energy storage for storing thermal energy, and a hydrogen storage for storing hydrogen. Further, different types of hydrogen producers may refer to hydrogen producers producing hydrogen of different level of purity, different quality and/or by different hydrogen production processes or units. Operation of one or more of the aforementioned degrees of freedom or components of the industrial plant can affect energy consumption and operational costs of the industrial plant. Hence, by including or considering one or more of the aforementioned degrees of freedom, the optimum operational setpoints can be reliably, accurately, and flexibly be determined by the computing system.

In particular, different types of hydrogen producers can refer to hydrogen producers generating hydrogen that is categorized in different colors of hydrogen, such as green hydrogen, non-green hydrogen, black hydrogen, blue hydrogen, brown hydrogen, or grey hydrogen. As commonly understood by the skilled person, green H2 is made by using clean electricity from renewable energy sources, whereas non-green H2 is produced using other sources of electricity. For instance, blue H2 is generated in a steam reforming process with carbon capture and storage of greenhouse gases, grey H2 is created using steam methane reformation but without capturing the greenhouse gases, black H2 is generated using black coal, and brown H2 is generated using lignite or brown coal.

In the following, various advantages achievable with the method described herein are summarized, which can inter alia result from considering one or more of the aforementioned degrees of freedom. Alternative or additional supply paths for hydrogen may be introduced, for example using one or more of a steam methane reforming (SMR) unit, an electrolyzer, a hydrogen storage, and/or an external H2 supply. Also, switching between different supply paths for hydrogen, e.g. based on changing situations, may be enabled. Also, the method can allow for an introduction and optimal utilization of storage elements and/or energy storages, such as electric batteries, hydrogen tanks, heat reservoirs, and the like, at the industrial plant. Moreover, waste in the form of hydrogen, heat, and/or steam may be reduced by coupling different process parts and supplying excess in one to another one. For instance, flaring of excess hydrogen may be minimized. Moreover, different supply paths of electrical power or energy, such as e.g., from an energy supply grid, an energy market, and/or via renewable energy sources, can be utilized. Also, different supply paths of thermal energy, e.g. heat and/or steam may be chosen. Also, an interaction of the industrial plant with the energy market can be optimized to benefit from varying conditions and offer/sell own flexibilities to other market participants. Further, the impact on residual equipment life, maintenance and/or future efficiency of one or more components of the industrial plant can be considered in the optimization, for example based on considering stress caused by operations, like production changes or participation to ancillary services deliver. Further, the method may allow to prepare on short term for situations that are likely to happen in the future, such as falling energy prices, an increasing H2 and/or electricity demand, a shortage of energy supply, and the like. Moreover, a primary goal of production of the industrial plant may be changed for a particular period of time based on the optimization. For instance, an ammonia plant might change to selling the majority of the intermediate hydrogen, reacting to changing market conditions, or electrolyzes could be utilized to favor ancillary services, like e.g. primary and secondary reserve delivery, over H2 production if the necessary H2 needs can be complemented with SMR with a favorable economic balance. Further, the production schedule and thus energy plan for the industrial plant may be altered or changed based on the optimization, e.g. to react to requirements or opportunities from an energy supply grid.

According to an embodiment, the industrial plant comprises one or more energy storages for storing electrical energy, thermal energy and/or hydrogen, wherein the method comprises computing, by means of the modelling module, an amount of energy and/or hydrogen storable and/or stored in the one or more energy storages. Therein, the one or more optimum operational setpoints are determined based on the computed amount of energy and/or hydrogen storable and/or stored in the one or more energy storages. For instance, a storage state of the one or more energy storages may be determined for determining the amount of energy and/or hydrogen stored and/or storable in the one or more energy storages may be determined.

Accordingly, the amount of energy and/or hydrogen currently stored in one or more energy storages, a storage state and/or the amount of energy storable in one or more energy storages may refer to operational parameters, for which the computing device may receive (current) values, and compute a forecasted time-series and/or boundaries in order to determine the optimum operational setpoints. Generally, considering one or more energy storages for the industrial plant can allow for an improved optimization of operation of the industrial plant, for example which can allow for an optimum utilization of the energy storage(s) and/or for a compensation of fluctuations in availability and pricing of electrical energy suppliable to the plant via the at least one source of electrical energy.

According to an embodiment, the operational parameters include an availability of renewable energy suppliable to the industrial plant via the at least one source of electrical energy and a pricing of renewable energy, wherein the one or more optimum operational setpoints are determined based on one or both the availability and the pricing of renewable energy. Accordingly, (current) values for the availability and pricing of renewable energy may be received and/or determined by the computing system. Also, a forecasted time-series for values and/or boundaries of the availability and pricing of renewable energy can be computed by the computing system. In particular, the one or more optimum operational setpoints may be determined, such that consumption of renewable energy is maximized and operation costs for operating the industrial plant are minimized, when the industrial plant is operated according to the one or more optimum operational setpoints. Taking availability and pricing of renewable energy into consideration can in turn allow to flexibly control or adjust production of green and non-green hydrogen produced or generated with one or more hydrogen producers of the industrial plant.

According to an embodiment, the industrial plant comprises at least one green hydrogen producer configured to produce green hydrogen based on at least partially supplying the at least one green hydrogen producer with renewable energy, and the industrial plant comprises at least one non-green hydrogen producer configured to produce non-green hydrogen. Further, the one or more optimum operational setpoints can be determined based on one or both the determined availability and pricing of renewable energy, for example such that consumption of renewable energy is maximized and operation costs (also referred to as operational costs) for operating the industrial plant are minimized.

According to an example, the at least one green hydrogen producer includes at least one electrolyzer unit for generating green hydrogen based on supplying the electrolyzer unit at least partially with renewable energy, and the at least one non-green hydrogen producer includes at least one of a thermal methane pyrolysis unit, a steam methane reforming unit with or without carbon capture, an integrated gasification combined cycle unit, and an autothermal reforming unit.

According to an embodiment, the one or more optimum operational setpoints are determined, such that production of green hydrogen with the at least one green hydrogen producer is maximized at times of high availability of renewable energy and/or at times of low price for renewable energy. Alternatively or additionally, the one or more optimum operational setpoints are determined, such that production of green hydrogen with the at least one green hydrogen producer is minimized at times of low availability of renewable energy and/or at times of high price for renewable energy. Accordingly, production of green hydrogen may be optimized or maximized in dependence of availability and pricing of renewable energy.

According to an embodiment, the industrial plant includes at least one steam generator for generating steam, wherein the optimum operational setpoints are determined such that steam production by the at least one steam generator, and one or more of energy consumption of the industrial plant, energy production of the industrial plant, and hydrogen production of the at least H2 producer are coordinated across or with respect to each other. Optionally, the operational parameters may include steam production by the at least one steam generator, and a forecasted time-series for values and/or boundaries of steam production may be computed to determine the optimum operational setpoints. For example, the optimum operational setpoints may be determined such that steam production is maximized and energy consumption is minimized. Alternatively or additionally, the optimum operational setpoints may be determined such that steam production is maximized and hydrogen production is maximized.

In an exemplary implementation, the industrial plant may include one or more electrolyzers, e.g., one or more high temperature electrolyzers, such as solid oxide electrolysis cells, which can consume or utilize steam generated by the at least one steam generator, for example for heating and/or preheating water. Accordingly, the production of steam, hydrogen, energy consumption and/or energy production can be coordinated and, for example, adapted to changes in the hydrogen production by the computing system based on determining the one or more optimum operational setpoints.

According to an embodiment, the operational parameters of the industrial plant include one or both availability of renewable energy and a pricing of renewable energy. Optionally, the method may comprise determining, by the computing system based on one or more weather parameters associated with production of renewable energy, availability of renewable energy and a pricing of renewable energy. In other words, availability and pricing of renewable energy may be determined by the computing system based on one or more weather parameters. For instance, a time-series for values and/or boundaries of the availability and pricing of renewable energy may be computed in order to determine the optimum operational setpoints based thereon. By way of example, the one or more weather parameters may be indicative of solar energy, waterpower and/or wind energy producible by one or more sources of renewable energy. Using such weather parameters or weather data can allow to accurately forecast availability and pricing of renewable energy, and hence to timely adjust operation of the industrial plant accordingly.

Using a green H2 producer and/or using different types of H2 producers in the industrial plant can increase complexity of the overall operational control of the industrial plant, wherein the method for optimizing operational control described herein can provide various benefits in terms of optimizing operation of the industrial plant with respect to one or both energy consumption and operational costs, and/or can provide a solution for challenges arising from producing green and non-green hydrogen. Generally, it may be favorable to decarbonize industrial production with the industrial plant, which may pose several requirements or conditions, thereby increasing the operational complexity of production setpoints and decisions to be made during operation of the industrial plant. For instance, green H2 reliance on renewable energy can introduce a variability in green H2 availability. Additionally, forecasting errors may have to be taken into account. Also, onsite production of green hydrogen can introduce a new H2 source with different response times than conventional processes of non-green H2 producers. For example, production of green hydrogen in parallel to existing production paths, e.g. of non-green hydrogen, can increase flexibility but also increase the interconnection and sector coupling between the different production paths for producing green and non-green hydrogen. Moreover, progressive migration of equipment to electrical energy may increase imported power volumes. As energy price, however, is varying over time, even if contracted via a power purchase agreement (PPA), the method and computing system described can allow to determine how much and when energy is needed for the industrial process. Further, due to reduction of thermal production, transmission system operators (TSO) usually focus on participation to grid stability, and power quality aspects towards the grid and requirements for consumption forecasting and planning may become more relevant. Also, an increasing amount of ancillary services as value streams, such as primary reserve participation, secondary reserve participation production, grid stabilization, and the like can be more exploited. Moreover, using byproducts that formerly have been wasted can result in an even tighter coupling of the sectors of the industrial plant, such as e.g. waste heat of electrolyzers, electrical generation by waste heat, and the like.

A non-limiting example domain, where the aforementioned challenges arise, are refineries. Refineries can play an important role as green H2 hubs, because there can be significant benefits in having green H2 production integrated in refineries, as refineries typically have already large hydrogen networks, large CO₂ footprint, a lot of experience in H2 operations and have a reliable connection with the energy supply grid. Other examples are ammonia production or production of eFuels and/or synthetic fuels.

Accordingly, green H2 integration in a refinery environment, or generally integration thereof in an industrial plant, can lead to an increase in complexity and bring disturbance to the H2 networks of the industrial plant. Green H2 production is naturally linked to availability of renewable energy, which can be heavily influenced by factors that are not under the control of the industrial plant, such as availability of wind power and solar irradiance in the location where the renewables are placed, which could be close or far away from the industrial plant, the latter case being relevant when the refinery has contracts (PPA, power purchase agreements) for energy import from the grid with renewables origin. As a result, industrial plants, such as refineries and chemical plants, should preferably continuously balance green H2 production with steam methane reforming (SMR) and/or autothermal reforming (ATR) production at a given H2 demand or consumption from one or more components of the industrial plant, such as the at least one H2 consumer, like Hydrocracker, Hydrotreater, and the like. This decision may not only be influenced by the availability of renewable energy, but also the energy price or pricing of renewable energy. Hence, the method for optimizing operational control and/or optimizing operation of the industrial plant, as described herein, can allow for an efficient and reliable determination of the optimum operational setpoints, taking into account both availability and pricing of renewable energy.

According to an embodiment, the operational parameters further include a hydrogen demand of one or more external hydrogen consumers and a pricing of hydrogen. Further, the method comprises allocating an amount of hydrogen producible with the at least one hydrogen producer of the industrial plant to the at least one external hydrogen consumer, thereby optimizing operation costs of the industrial plant. For instance, H2 demand and/or consumption of one or more external consumers may be predicted, e.g. a forecasted time-series of values and/or boundaries of the hydrogen demand may be computed to determine the optimum operational setpoints, based on which the industrial plant and/or one or more components thereof, in particular of the at least one H2 producer, can be controlled or operated.

According to an embodiment, the at least one hydrogen consumer of the industrial plant includes at least one energy cogeneration unit configured to generate electrical energy based on hydrogen provided by the at least one hydrogen producer. Alternatively or additionally, the at least one hydrogen consumer may be Hydrocracker, Hydrotreater, or the like. Optionally, the operational parameters may include energy production of the at least one energy cogeneration unit. Further, (current) values of the energy production of the at least one energy cogeneration unit may be received at the computing system, the computing system may determine a forecasted time-series for values and/or boundaries of the energy production of the at least one energy cogeneration unit, and the optimum operational setpoints may be determined based thereon. This can allow to comprehensively and flexibly take the at least one energy cogeneration unit into account for the optimization.

According to an embodiment, computing the forecasted time-series for values and/or boundaries of the operational parameters of the industrial plant includes one or more of, in particular all of:
- computing boundaries for hydrogen production by the at least one hydrogen producer;
- computing a time-series for values and/or boundaries of hydrogen consumption by the at least one hydrogen consumer; and
- computing a time-series for values of the pricing and/or availability of electrical energy.
Optionally, a forecasted time-series for values and/or boundaries of any one or more operational parameters described herein can be computed, and taken inti account by the optimization module of the computing system to determine the optimum operational setpoints.

According to an embodiment, the operational parameters include one or both a current degradation and a degradation over time of one or more components of the industrial plant, wherein the one or more optimum operational setpoints are determined based on one or both the determined current degradation and the determined degradation over time of said one or more hardware component. Therein, the degradation over time may refer to an expected degradation in the future. By determining the current degradation and the degradation of the one or more component over time, for example residual life, a lifetime, an efficiency, a residual efficiency, and/or maintenance costs involved in maintaining or servicing the one or more components of the industrial plant can be taken into account in the determination of the optimum operational setpoints, thereby e.g. allowing for a comprehensive and versatile optimization. Accordingly, determining the current degradation and/or the degradation over time can include one or more of estimating a lifetime of the one or more components of the industrial plant, estimating a residual life of the one or more components, estimating an efficiency of the one or more components, estimating a reduction in efficiency of the one or more components over time, and estimating maintenance costs involved in operating the one or more hardware components.

According to an embodiment, at least a part of the operational parameters of the industrial plant and/or at least a part of the one or more optimum operational setpoints are forecasted for one or more time horizons in the future, preferably for a plurality of different time horizons in the future. Therein, a time horizon may refer to a range of time or time period in the future. Optionally, a time horizon may define or be associated with a particular granularity of the forecasted time-series for the values and/or boundaries of the operational parameters, wherein the granularity may refer to a temporal distance between consecutive values of the forecasted timeseries for the values and/or boundaries. Accordingly, the at least part of the operational parameters of the industrial plant and/or the at least part of the one or more optimum operational setpoints may be forecasted for one or more time horizons in the future and one or more granularities.

For instance, the operational parameters of the industrial plant and/or at least a part of the one or more optimum operational setpoints may be forecasted for one day, for a plurality of days, for one week, for several weeks and even longer time periods or time horizons, optionally with one or more granularities ranging from seconds to several days, weeks or even longer. This can allow to analyze short-term, mid-term and long-term operation of the industrial plant and to select the set of optimum operational setpoints that best fits the requirements and needs of the industrial plant.

In an exemplary implementation, the at least one hydrogen producer and the at least one hydrogen consumer are coupled to and/or are part of a hydrogen network of the industrial plant, wherein the one or more optimum operational setpoints are determined, such that a hydrogen pressure in the hydrogen network is within a predefined pressure range and/or such that disturbances of the hydrogen pressure in the hydrogen network induced by the at least one hydrogen consumer and/or the at least one hydrogen producer are minimized. Generally, utilizing one or more H2 producers and/or consumers in an industrial plant can lead to unfavorable disturbances in the hydrogen pressure of the plant's hydrogen network, which should preferably be balanced or compensated for. By taking such disturbances inferred by H2 producers and/or consumers into consideration in the determination of the optimum setpoints, the disturbances can be minimized or even avoided.

According to an embodiment, the one or more optimum operational setpoints are determined based on a plurality of criteria selected from the group of criteria consisting of minimizing overall operation costs of the industrial plant, minimizing emission of greenhouse gases, minimizing production of greenhouse gases, minimizing degradation of one or more hardware components of the industrial plant, maximizing resilience of one or more hardware components, maximizing ancillary grid services, maximizing production output of the industrial plant, maximizing quality of a product produced with the industrial plant, and maximizing production of green hydrogen with the at least one hydrogen producer of the industrial plant. One, more or all of the aforementioned criteria may be considered in one or more objective functions, based on which the optimization module can compute or determine the optimum operational setpoints. Hence, the method of optimizing operational control of the industrial plant can be flexibly adapted based on including the desired criteria in a respective objective function.

According to an embodiment, the method further comprises generating a control signal indicative of the determined one or more optimum operational setpoints, the control signal being usable for controlling one or more actuators and/or components of the industrial plant. Alternatively or additionally, the method may comprise providing the control signal indicative of the determined one or more optimum operational setpoints to the one or more actuators and/or components of the industrial plant to operate the industrial plant at the determined one or more optimum operational setpoints. Accordingly, based on the determined operational setpoints, the industrial plant may be operated in an optimal way, as determined by the computing system.

A further aspect of the present disclosure relates to a computing system configured to perform steps of the method, as described hereinabove and hereinbelow. It is again emphasized that any feature, function, and/or step of the method can be a feature, function and/or element of the computing system, and vice versa.

According to a further aspect of the present disclosure, there is provided a computer program, which, when executed by a computing system, instructs the computing system to perform steps of the method, as described hereinabove and hereinbelow.

According to a further aspect of the present disclosure, there is provided a computer readable medium, for example a non-transitory computer readable medium, storing a computer program, which, when executed by a computing system, instructs the computing system to perform steps of the method, as described hereinabove and hereinbelow.

These and other aspects of the disclosure will be apparent from and elucidated with reference to the appended figures, which may represent exemplary embodiments.

### Brief Description of the Drawings

The subject-matter of the present disclosure will be explained in more detail in the following with reference to exemplary embodiments which are illustrated in the attached drawings, wherein:
Fig. 1 shows a computing system according to an exemplary embodiment;
Fig. 2 shows a flowchart illustrating steps of a method for operational optimization and/or control of an industrial plant according to an exemplary embodiment;
Fig. 3a illustrates cost of hydrogen production in relation to energy price; and
Fig. 3b illustrates application of a computing system and/or a method for operational optimization to an exemplary industrial plant.

The figures are schematic only and not true to scale. In principle, identical or like parts are provided with identical or like reference symbols in the figures.

### Detailed Description of Exemplary Embodiments

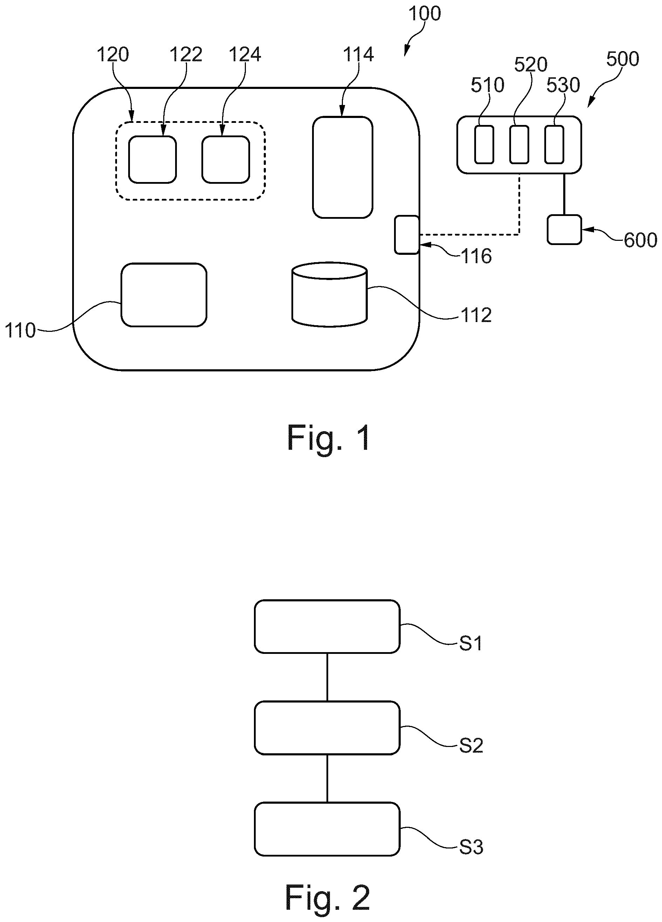

Fig. 1 shows a computing device 100 for operational optimization and/or control of an industrial plant 500 according to an exemplary embodiment.

The computing system 100 comprises at least one processor 110 for data processing. The at least one processor 110 may be part of a processing circuitry of the computing system 100.

The computing system 100 further comprises at least one data storage 112 for storing data and/or software instructions, for example in the form of a computer program, for instructing the computing system 100 to carry out steps of the method for operational optimization and/or control of the industrial plant 500, as described hereinabove and hereinbelow.

The computing system 100 further comprises one or more functional modules or components, commonly shown in Fig. 1 by reference numeral 120. The functional modules 120 may include a modelling module 122 for modelling the industrial plant 500, for example based on one or more mathematical or computational models of the industrial plant 500 and its physical interaction with at least one source of electrical energy 600, such as for example with an energy supply grid, a generator, a photovoltaic device, a wind turbine, a water power generator, and/or an electrical energy storage. The functional modules or components 120 of the computing system 100 further comprise an optimization module 124 for determining one or more optimum operational setpoints for operating the industrial plant 500.

The computing system shown in Fig. 1 further comprises a user interface 114 for outputting data and/or information to a user of the computing system 100, and/or for controlling the computing system 100 by the user.

Further, the computing system 100 comprises an interface 116 for communicatively and/or operatively coupling the computing system 100 to the industrial plant 500, and/or for coupling the computing system 100 to one or more external data sources, for example to receive or obtain one or more weather parameters and/or data related to energy pricing, as further described hereinabove and hereinbelow.

Fig. 2 shows a flowchart illustrating steps of a method for operational optimization and/or control of an industrial plant 500 according to an exemplary embodiment. The method may, for example, be carried out by the computing system 100 described with reference to Fig. 1. Accordingly, it is commonly referred to Figs. 1 and 2 in the following.

As schematically illustrated in Fig. 1, the industrial plant 500 comprises at least one H2 producer 510 for generating or producing H2, and at least one H2 consumer 520 consuming H2. For example, the H2 consumer 520 may comprise an energy cogeneration unit, e.g. in the form of a fuel cell, for generating electrical energy based on H2 generated and/or supplied by the H2 producer 510. Alternatively or additionally, the H2 consumer 520 may comprise a Hydrocracker and/or Hydrotreater.

The industrial plant 500 can comprise one or more further components, which are jointly illustrated with reference numeral 530 in Fig. 1. The further components 530 may include one or more energy storages for storing electrical energy, thermal energy and/or hydrogen. Alternatively or additionally, the further components 530 may include one or more H2 procures, one or more H2 consumers, one or more heat generators and/or one or more further sources of electrical energy.

Referring to Fig. 2, the computer-implemented method for operational optimization, for optimizing control and/or for controlling the industrial plant 500 comprises, in step S1, receiving, at the computing system 100, values of operational parameters of the industrial plant 500, the operational parameters including at least hydrogen production by the at least one hydrogen producer 510, hydrogen consumption by the at least one hydrogen consumer 520, energy production of the industrial plant, energy consumption of the industrial plant, availability of electrical energy via the at least one source of electrical energy 600 and pricing of electrical energy. For instance, data indicative of availability and pricing of electrical energy may be obtained or received by the computing system 100 from one or more external data sources, e.g. via interface 116.

The method includes, in step S2, computing, by means of the modelling module 122 of the computing system 100 based on a computational model of the industrial plant 500 and its physical interaction with the at least one source of electrical energy 600, a forecasted time-series for values and/or boundaries of at least some of operational parameters of the industrial plant 500.

Further, the method comprises a step S3 of determining, by means of the optimization module 124 of the computing system 100 based on the received values of the operational parameters and the computed forecasted time-series for values and/or boundaries of the operational parameters of the industrial plant 500, one or more optimum operational setpoints for optimizing operational control of the industrial plant 500 in terms of at least one of energy consumption and operation costs of the industrial plant 500. Therein, the one or more optimum operational setpoints are determined by the computing system 100 based on and/or taking into account at least one degree of freedom for the industrial plant 500. Such degree of freedom may, for example, be constituted by one or more of the further components 530 schematically illustrated in Fig. 1.

It should be noted that the method illustrated in Fig. 1 can include one or more further steps, as described in more detail hereinabove and hereinbelow.

In an exemplary implementation, the at least one H2 producer 510 of the industrial plant 500 may be a green H2 producer, for example an electrolyzer unit for generating green hydrogen based on supplying the electrolyzer unit at least partially with renewable energy. Further, the industrial plant 500 may optionally include one or more non-green H2 producers 530, such as e.g. a thermal methane pyrolysis unit, a steam methane reforming unit with or without carbon capture, an integrated gasification combined cycle unit, and an autothermal reforming unit. Using one or more green H2 producers 520 and/or one or more non-green H2 producers 530 at the industrial plant 500 can increase complexity of the operational control and corresponding optimization thereof based on the method described herein. In particular, an optimum operation, respectively the optimum operational setpoints of the industrial plant 500 may not only be influenced by the availability of renewable energy to produce green H2, but preferably should also include the price for electrical energy obtainable from the at least one source of electrical energy 600.

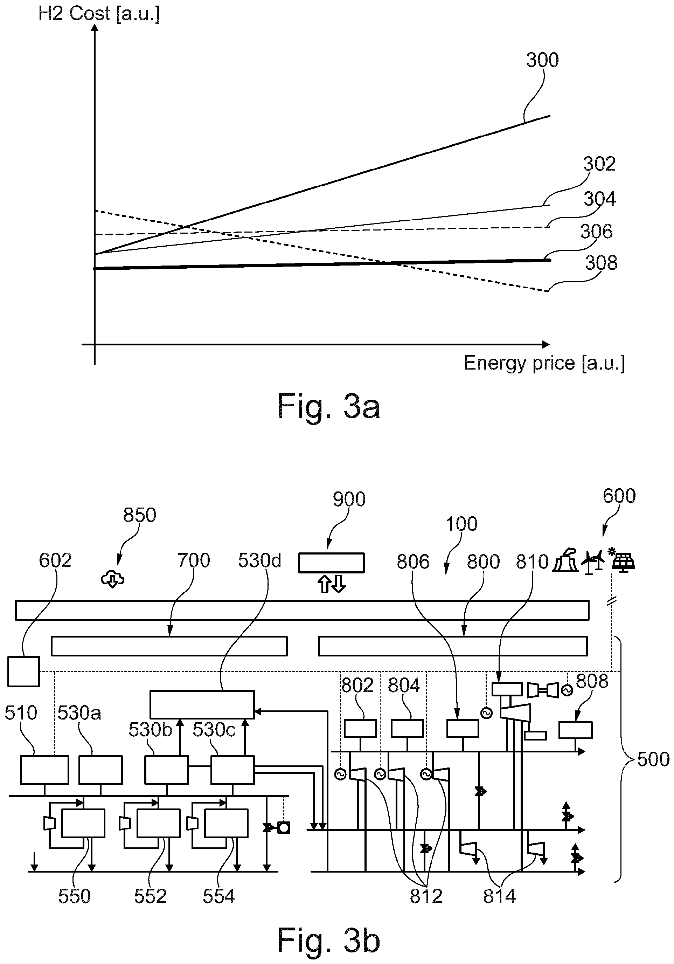

In particular, different H2 producers 510, 530 may have a specific cost of production, which depends on the energy price and the type of H2 producer 510, 530 utilized. Fig. 3a schematically illustrates the costs of hydrogen production in relation to energy price for various types of H2 producers 510, 530. Specifically, Fig. 3a shows the cost of hydrogen production on the y-axis (in arbitrary units) in relation to the energy price shown on the x-axis in arbitrary units for different ways to produce hydrogen via different production methods (resulting in hydrogen of so-called different color). Therein, line 300 relates to production costs of green H2 using e.g. an electrolyzer unit and renewable energy, line 302 illustrates H2 production costs using thermal methane pyrolysis and leaving solid carbon, line 304 illustrates H2 production costs using a steam methane reforming (SMR) with carbon capture, line 306 shows H2 production using SMR and emitting CO₂, and line 308 shows H2 production cost using an integrated gasification combined cycle. Evidently, production cost for producing H2 can significantly vary dependent on the energy price and type of H2 producer 510, 530 utilized. For instance, at low energy price production of green H2 may be favorable, whereas at high energy prices, production of green H2 (line 300) exceeds the production cost of H2 produced with other H2 producers (lines 302-308).

Overall, it makes economic sense to trim production of green H2, e.g. electrolyzer-based H2 production, to minimize the energy costs for the industrial plant 500. Therefore, the computing system 100 can be configured to compute the optimum operational setpoints based on maximizing green H2 when renewable energy is available, locally or via PPA, and when energy prices are low. On the other hand, the computing system 100 can be configured to compute the optimum operational setpoints based on minimize production green H2, e.g. electrolyzer-generated H2, when energy prices are high, for example with the threshold calculated considering pricing for SMR-generated H2. Accordingly, renewable energy can be exported or used for green H2 production, depending on energy price considerations. Also, the energy price could be variable over time, following the natural demand-response balancing decided, directly or indirectly by the energy market.

A further complexity can be introduced by the possibility to use an internal plant or refinery cogeneration unit 530 to produce the energy for a green H2 producer 510, e.g. an electrolyzer unit. The latter maybe favorable in cases where production is not sufficient, energy pricing is high and SMR production cannot be increased.

Apart from that, the one or more H2 producers 510, 530 may be part of an H2 network (700, see Fig. 3b) of the industrial plant that may be coupled to a steam network (800, see Fig. 3b) of the industrial plant 500. Therein, variations in the hydrogen network can have an impact on the steam network. For instance, SMR units may emit steam from excess heat, whereas modern electrolyzers (e.g., alkaline or polymer exchange membrane) may emit waste heat at low temperatures. Upcoming high temperature electrolyzers (e.g., solid oxide electrolysis cells) can consume steam for the preheating of water. Accordingly, the production of steam and power should preferably also be coordinated and adapted to changes in the hydrogen production by the computing system 100 based on determining the one or more optimum operational setpoints.

To schematically illustrate such further complexity, Fig. 3b illustrates application of a computing system 100 and/or a method for operational optimization to an exemplary industrial plant 500, which includes an H2 network 700 and a steam network 800, each comprising a plurality of components.

In particular, the H2 network includes one or more green H2 producers 510, such as e.g. one or more electrolyzers 510, which can be powered with renewable energy from the at least one source of electrical energy 600 and/or at least one further source of renewable energy 602. Further, the H2 network 700 includes a catalytic reforming unit 530a, two SMR units 530b, 530c, which may be coupled to a carbon capture unit 530d. Moreover, the H2 network may include a hydrocracker unit 550 and one or more hydrotreating units 552, 554 for increasing a purity of hydrogen in the H2 network 700.

In the example shown in Fig. 3b, the steam network 800 of the industrial plant 500 includes a plurality of storages or other components 802, 804, 806, 808. Further, the steam network 800 may include a heat steam recovery cogeneration unit 810, and further optional components, such as steam refining units 812 and others 814.

As illustrated by the solid arrows between the components of the plant 500 in Fig. 3b, H2 from the H2 network 700 may be utilized in the steam network 800, for example to supply components 802-814, and electrical energy or another form of energy generated in the steam network 800 may be supplied to the H2 network 700. This can result in a strong coupling of the H2 network 700 and the steam network 800, and optimization of the operation of the industrial plant 500 can be challenging. However, any one or more of the components exemplary illustrated in Fig. 3b can be considered by the computing system 100 in the determination of the optimum operational setpoints, as described in detail hereinabove and hereinbelow.

In the following, various aspects, features, and advantages of the method and computing system 100 described herein are summarized. As the following summary description equally applies to any of Figs. 1 to 3b, it is commonly referred to these Figures.

Decisions on optimal allocation of H2 and steam production between different producers 510, 530 and/or other components shown in Fig. 3b may be challenging and may become even more challenging with green H2, e.g. produced with electrolyzer units 510. In the past, the complexity was related to having multiple SMR units 530b, 530c, multiple H2 pressure and purity levels (illustrated as solid bold horizontal lines in Fig. 3b) and H2 recovery units, such as e.g. reformers 810, 812, and continuous disturbances from H2 consumers like e.g. Hydrocracking, Hydrotreating, and the like. Calculation of the optimal operational setpoints, e.g. an optimal electrolyzer load, and optimal use of future storage of H2 can be performed using the method and computing system 100 described herein. The method and computing system 100 described herein can, inter alia, forecast and/or estimate production for renewable energy production, e.g. from solar, wind or waterpower sources 602, as illustrated by reference numeral 850 in Fig. 3b. For instance, one or more weather parameters may be retrieved by the computing system 100, e.g. via interface 116 from one or more external sources. Further, the method and computing system 100 described herein can forecast and/or estimate future expected energy prices on the market, a future H2 demand from users or external H2 consumers, and/or an expected steam and power demand for the refinery users or components.

Moreover, the method and computing system 100 described herein can consider details of appropriate efficiency curves for the various equipment or components of the industrial plant 500, and/or calculate the cost of H2 production from different H2 producers, e.g. based on the graph shown in Fig. 3a, and optionally depending on the current situation and/or the utilization of one or more components, such as e.g. electrolyzer units 510, SMR 530a without carbon capture unit CCU 530d, SMR 530b, 530c, with CCU 530d, autothermal reforming (ATR), gasification (IGCC), methane pyrolysis, or the like. Also, the cost of internal power production can be computed.

Further, the method and computing system 100 described herein can consider changes over time, such as the capability for the internal combined heat power (CHP) production in terms of power range over time. Also, it can consider the impact on electrolyzer residual life and maintenance costs, the impact of green H2 production, the impact of delivery of ancillary service, e.g. primary, secondary and tertiary reserve delivery, the impact on compressors' or other components' residual life, including the impact of green H2 production and maintenance costs, and the impact of delivery of ancillary services, e.g. primary, secondary and tertiary reserve delivery. Further, the method and computing system 100 described herein can use potential flexibilities to optimize the objective function, such as e.g. one or more energy storages, for example H2 storage, Battery Energy Storage Systems (BESS), or different H2 production paths.

To provide these functionalities, the method and computing system 100 described herein can include a mathematical or computational model of the plant 500, for capturing the physical behavior including cost, efficiency, degradation, consumption and/or production/operational parameters. Also, a multi physics sector coupling across electric power, heat/steam, gas/H2 and potentially other forms of energy or products can be considered in the computational model. Further, several to all parts or components, e.g. production units, of the plant 500 can be considered in the computational model allowing for one central (holistic and combined) capturing of all interlinked effects.

Moreover, the method and computing system 100 described herein can include a forecasting or modelling module 122, which may make own forecasts or connect to external forecasts for demand/load, renewable power infeed, market prices and other external factors outside the plant 500.

Further, the method and computing system 100 described herein can include an optimization component or module 124 that determines optimal operational setpoints to achieve the given objective, typically minimizing the overall required cost for production across a prediction horizon, and/or considering not only the real time cost but also renewable energy production, H2 demand and storage use over time, for example. The optimization module 124 can combine several (multi criteria) goals, such as minimizing cost, minimizing greenhouse gas emissions, minimizing degradation, maximizing resilience, and maximizing production output and quality.

Further, the optimization module 124 may be layered, running several optimizations on different time-horizons and granularities. For instance, for predictive optimization, a 24 to 48-hour time horizon may be used to plan for longer dynamics such as no renewable energy available, wind and use of storage. The optimization module 124 may estimate and consider energy prices. The resulting optimal plan may be be sent to the energy market or energy trader for bidding. This system 100 may incorporate MILP ability to allow considering activation and deactivation of equipment to optimize future cost of operations. The optimization module 124 can consider equipment limits and constraints as well as, among them, harmonics, and reactive power limits, impacted by electrolyzer and cogeneration loads.

Further, another layer of the optimization module 124 may relate to real time optimization. The optimization module 124 may perform optimization of load allocation on equipment considering efficiency of each asset like for example, different H2 producers considering a given power exchange with the energy supply grid and considering the use of the internal cogeneration to complement renewables and power import from the energy supply grid (also referred to herein as grid).

Another layer of the optimization module 124 may relate to Advanced Process Control (APC). The module 124 can balance the H2 network, to avoid flaring and let down of hydrogen to fuel gas or lower purity levels and, when possible, implements the real-time optimization targets. The optimization module 124 can manage a hierarchy of priorities - the highest priority targets may be related to network stabilization and balance between H2 use and production and, at a lower priority, balancing on H2 producers. The priority may be managed via use of a multi-stage optimizer that does not allow to compromise a higher priority target to pursue a lower priority target. The APC layer of the optimization module 124 may also support the primary and secondary reserve delivery by preserving control margins and avoiding saturation. This module 124 can also make sure limits on harmonics and reactive power content may be kept.

Another layer of the optimization module 124 may relate to primary and secondary reserve delivery. This layer may provide fast response to deliver ancillary services to support frequency control, which may be supported by the APC layer of the module 124 to keep sufficient control margin and allow delivery of primary and secondary reserve as needed.

Another layer of the optimization module 124 may relate to a shorter time horizon with higher temporal granularity or resolution to plan for more reliable immediate future setpoints, correcting for actual measurements deviating from forecasting. Yet another layer of the optimization module 124 may relate to a mechanism to interlink those, e.g. to keep spares now for the longer future, but as well correcting long-term planning with current evolvements.

Moreover, the method and computing system 100 described herein can include communication connections to the physical process in both directions (to sensors and actuators), allowing closed loop control. The connection might be directly to the process equipment or (more likely) to one or more DCS layers, taking care of security and interlock features of the plant or submodules. This can allow for updating parameters of the internal operational plant model as well as sending optimal setpoint information to the process.

Further, the method and computing system 100 described herein can include bidirectional communication connection, illustrated with reference numeral 900 in Fig. 3b, for continuous market interaction to be informed about changing prices, availability, and requirements as well as actual production of contracted PPA (power purchase agreements), to publish information about consumption, demand planning and available flexibilities for demand side management or grid stabilization and their limits, and with the ability to actively participate in the market by buying, bidding, or accepting offers.

Moreover, the method and computing system 100 described herein can calculate the optimal H2 allocation in real-time operations and also in forecasting mode. The forecasting mode will allow to estimate power exchange with the grid and prepare proposed sales plans for energy market use, directly or via an energy trader. Available flexibility in the CHP, H2 storage and BESS may be used to identify the optimal power exchange with the grid or at least one source of electrical energy 600 and H2 production from the different units or components, such as e.g., electrolyzers 510, SMR 530a-c, and others.

The method and computing system 100 described herein can include forecasting for energy market bidding and the actuation of the power and H2 export plant. For instance, weather parameters or data, a plant load, and/or an information related to a product mix may be utilized for forecasting a time-series for values and/or boundaries of one or more operational parameters. Using one or more computational models, one or more time-series of the plant demand, e.g. energy consumption, may be computed, and optionally compared to an actual production or load of the plant. Based thereon, sale or purchase of energy from the energy market may be proposed by the computing system 100. In real-time conditions, the calculation may be repeated, e.g. considering an adjusted power export or power import plan over time, and minimizing the cost of operation considering any discrepancy from the original plan like e.g., higher/lower than expected H2 demand, higher/lower than expected steam demand, higher/lower than expected power demand. The calculation may also consider the dynamic response of the process units or components and equipment, and any relevant physical constraint like e.g., min load, max load, or the like.

The method and computing system 100 described herein can act as an additional controller that can take care of the following tasks: manage the H2 network 700 to preserve balancing and allow optimal H2 production allocations; manage the steam network 800 to preserve balancing and allow optimal power production to fulfill the power export/power import optimal plan; coordinate H2 and power production to optimize the economic benefits while minimizing the CO₂ footprint; forecast renewable energy production, continuously update the plan considering deviations in renewable energy availability; and interact with the energy market.

With the method and computing system 100 described herein, the following use cases can be covered. Alternative supply paths for hydrogen may be introduced (SMR, electrolyzer, hydrogen storage, external supply) and switching between them based on changing situations may be enabled; optimal utilization of storage elements (electric batteries, hydrogen storage vessels, heat reservoirs) may be enabled; and waste (hydrogen, heat, steam) may be reduced by coupling different process parts and supplying excess in one to another one, e.g. flaring of access hydrogen may be minimized, and/or different supply paths of power may be chosen (grid/market, direct renewable e.g., PPA, CHP, BESS). Also, different supply paths of heat/steam may be chosen (CHP, burner, waste-heat e.g., from electrolyzer or chemical process), and it may be closely interacted with the market to benefit from varying conditions and offer/sell own flexibilities to other market participants. Also, the impact on residual electrolyzer, compressors and, in general, equipment or component life may be considered, including stress caused by operations, like production changes, and participation to ancillary services deliver. Also, it may be prepared short term for situations that are likely to happen in the future (e.g. falling prices, increasing demand, shortage of supply, etc.), and the primary goal of production may be changed for a period of time. For instance, an ammonia plant might change to selling majority of the intermediate hydrogen, reacting to changing market conditions, and/or electrolyzes could be utilized to favor ancillary services like e.g. primary and secondary reserve delivery over H2 production if the necessary H2 needs can be complemented with SMR with a favorable economic balance. Also, the production schedule and thus energy plan may be changed to react to requirements or opportunities from the energy supply grid.

Therein, each of the choices can have a different, potentially time-varying, resulting cost and green-house-gas impact. Furthermore, some of the assets may relate to sector coupling, as for example an electrolyzer may couple power, hydrogen, and heat; a CHP mqay couple gas, power, and heat; a SMR may couple power, gas, and hydrogen; and a boiler may couple gas and heat.

Accordingly the optimization strategy described herein can account for the future interactions between H2, steam, power, renewable energy and energy market pricing. Choosing the best combination for each point in time may require complex algorithms, as provided by the present disclosure. In particular, the method and computing system 100 described herein can optimize operational setpoints of assets in an industrial plant 500, e.g. a refinery or chemical plant, to minimize operational cost and green-house-gas footprint ahead of time to enable reliable market interactions, taking care of asset limits, taking care of supply quality and H2 purity, steam temperature, steam pressure, power harmonics content and reactive power; and supplying the required demand of power, hydrogen, and heat/steam. The method and computing system 100 described herein can comprise forecasting modules for market prices, renewable power availability and demand curves; a module to interact with market participants for forward-looking planning and bidding; one or more models of the available controllable assets (electrolyzer, CHP, SMR, boiler, BESS, H2-Storage) including limits, efficiencies, and cost models; one or more models of distribution network e.g. steam networks, H2 networks; a model of consumers/users e.g. future demand of H2; and optimization an engine to find the combination of setpoints that minimizes a given objective function. Also, it may include modules for a predictive optimization for planning of production and market interaction; a real-time optimization to generate setpoints for the controllable assets following the plan and considering disturbances as well as calls from ancillary grid services; and advanced process control to regulate the networks balancing according to physical constraints, the optimizer computed targets and considering transient process dynamics.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practicing the claimed invention, from a study of the drawings, the disclosure, and the appended claims.

In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

## Claims

1. A computer-implemented method for operational optimization and/or control of an industrial plant (500) comprising at least one hydrogen producer (510) and at least one hydrogen consumer (520), the industrial plant (500) being couplable to at least one source of electrical energy (600), the method comprising:
receiving, at a computing system (100), values of operational parameters of the industrial plant (500), the operational parameters including at least hydrogen production by the at least one hydrogen producer (510), hydrogen consumption by the at least one hydrogen consumer (520), energy production of the industrial plant (500), energy consumption of the industrial plant (500), availability of electrical energy via the at least one source of electrical energy (600) and pricing of electrical energy;
computing, by means of a modelling module (122) of the computing system (100) based on a computational model of the industrial plant (500) and its physical interaction with the at least one source of electrical energy (600), a forecasted time-series for values and/or boundaries of the operational parameters of the industrial plant (500); and
determining, by means of an optimization module (124) of the computing system (100) based on the received values of the operational parameters and the computed forecasted time-series for values and/or boundaries of the operational parameters of the industrial plant (500), one or more optimum operational setpoints for optimizing operational control of the industrial plant (500) in terms of at least one of energy consumption and operation costs of the industrial plant (500), wherein the one or more optimum operational setpoints are determined based on at least one degree of freedom for the industrial plant (500).

2. The method according to claim 1, wherein the at least one source of electrical energy (600) includes one or more of an energy supply grid, a generator, a photovoltaic device, a wind turbine, a water power generator, and an electrical energy storage.

3. The method according to any one of the preceding claims, the at least one degree of freedom for the industrial plant (500) for determining the one or more optimum operational setpoints is constituted by one or more of:
- at least one energy storage (802, 804, 806) of the industrial plant (500) for storing electrical energy, thermal energy and/or hydrogen;
- at least two different types of energy storage (802, 804, 806) of the industrial plant (500);
- at least two different types of hydrogen producers (510);
- at least one further source of electrical energy;
- at least one further hydrogen producer (530);
- at least one further hydrogen consumer;
- at least one energy cogeneration unit (810);
- at least one heat generator and;
- at least one steam generator.

4. The method according to any one of the preceding claims, further comprising:
computing, by means of the modelling module (122), an amount of energy storable and/or stored in one or more energy storages (802, 804, 806) of the industrial plant (500), wherein the one or more optimum operational setpoints are determined based on the computed amount of energy storable and/or stored in the one or more energy storages (802, 804, 806).

5. The method according to any one of the preceding claims, wherein the operational parameters include an availability of renewable energy suppliable to the industrial plant (500) via the at least one source of electrical energy (600) and a pricing of renewable energy; and
wherein the one or more optimum operational setpoints are determined based on one or both the availability and the pricing of renewable energy, preferably wherein the one or more optimum operational setpoints are determined, such that consumption of renewable energy is maximized and operation costs for operating the industrial plant (500) are minimized, when the industrial plant (500) is operated according to the one or more optimum operational setpoints.

6. The method according to any one of the preceding claims, wherein the industrial plant (500) comprises at least one green hydrogen producer (510) configured to produce green hydrogen based on at least partially supplying the at least one green hydrogen producer (510) with renewable energy; and
wherein the industrial plant (500) comprises at least one non-green hydrogen producer (530) configured to produce non-green hydrogen.

7. The method according to the preceding claim, wherein the at least one green hydrogen producer (510) includes at least one electrolyzer unit for generating green hydrogen based on supplying the electrolyzer unit at least partially with renewable energy; and
wherein the at least one non-green hydrogen producer (530) includes at least one of a thermal methane pyrolysis unit, a steam methane reforming unit with or without carbon capture, an integrated gasification combined cycle unit, and an autothermal reforming unit.

8. The method according to any one of claims 6 and 7, wherein the one or more optimum operational setpoints are determined, such that production of green hydrogen with the at least one green hydrogen producer (510) is maximized at times of high availability of renewable energy and/or at times of low price for renewable energy; and/or
wherein the one or more optimum operational setpoints are determined, such that production of green hydrogen with the at least one green hydrogen producer (510) is minimized at times of low availability of renewable energy and/or at times of high price for renewable energy.

9. The method according to any one of the preceding claims, wherein the operational parameters further include a hydrogen demand of one or more external hydrogen consumers and a pricing of hydrogen; and wherein the method further comprises:
allocating an amount of hydrogen producible with the at least one hydrogen producer (510) of the industrial plant (500) to the at least one external hydrogen consumer, thereby optimizing operation costs of the industrial plant (500).

10. The method according to any one of the preceding claims, wherein the one or more optimum operational setpoints are determined based on a plurality of criteria selected from the group of criteria comprising minimizing overall operation costs of the industrial plant (500), minimizing emission of greenhouse gases, minimizing production of greenhouse gases, minimizing degradation of one or more hardware components of the industrial plant (500), maximizing resilience of one or more hardware components, maximizing ancillary grid services, maximizing production output of the industrial plant (500), maximizing quality of a product produced with the industrial plant (500), and maximizing production of green hydrogen with the at least one hydrogen producer (510) of the industrial plant (500).

11. The method according to any one of the preceding claims, wherein computing the forecasted time-series for values and/or boundaries of the operational parameters of the industrial plant (500) includes one or more of:
- computing boundaries for hydrogen production by the at least one hydrogen producer (510);
- computing a time-series for values or boundaries of hydrogen consumption by the at least one hydrogen consumer (520); and
- computing a time-series for values of the pricing and/or availability of electrical energy.

12. The method according to any one of the preceding claims, wherein the industrial plant includes at least one steam generator for generating steam, and wherein the optimum operational setpoints are determined such that steam production by the at least one steam generator and energy consumption by the industrial plant are coordinated.

13. The method according to any one of the preceding claims, wherein the at least one hydrogen consumer (520) of the industrial plant (500) includes at least one energy cogeneration unit configured to generate electrical energy based on hydrogen provided by the at least one hydrogen producer

14. The method according to any one of the preceding claims, wherein at least a part of the operational parameters of the industrial plant (500) and/or at least a part of the one or more optimum operational setpoints are forecasted for a plurality of different time horizons in the future.

15. A computing system (100) for operational control of an industrial plant (500), the computing system (100) being configured to perform the method according to any one of claims 1 to 14
